# EUROPÄISCHE PATENTANMELDUNG

(11) **EP 4 353 753 A1**
(43) Veröffentlichungstag der Anmeldung: **17.04.2024**
(21) Anmeldenummer: 22200889.8
(22) Anmeldetag: 11.10.2022
(51) Int. Cl.: C08F 6/28, B29B 13/00

(54) **VERFAHREN UND VORRICHTUNG ZUR ABSATZWEISEN DESODORIERUNG VON KUNSTSTOFFEN**

(71) Anmelder: Zeppelin Systems GmbH, 88045 Friedrichshafen (DE)
(72) Erfinder: Schneider, Hans, 88131 Lindau (DE); Korehenke, Marcus, 88250 Weingarten (DE)
(74) Vertreter: Riebling, Peter

(57) **Zusammenfassung**

1. Verfahren zur Desodorierung von Granulaten zur Entfernung flüchtiger organischer Verbindungen (VOC) durch Wärme- und/oder Gasbehandlung in einem Entgasungssilo (4) mit folgenden Verfahrensschritten:
1.1 Heizen der Granulate im Entgasungssilo (4) auf eine Desodorierungstemperatur, die bei oder unter dem Erweichungspunkt der Granulate liegt;
1.2 Halten der Granulate auf der Deodorierungstemperatur;
1.3 Ausspülen volatiler Materialien aus den Granulaten aus dem Entgasungssilo (4) durch Spülung der Produktfüllung (36) im Entgasungssilo (4) mittels eines erhitzten Spülgases;
1.4 Kühlen der Granulate
**dadurch gekennzeichnet, dass**
dass eine Desodorierung von ReGranulaten (62) erfolgt und dass die Behandlung der ReGranulate (62) im Entgasungssilo (4) Chargen- oder absatzweise erfolgt.

## Beschreibung

Die Erfindung betrifft ein Verfahren und eine Vorrichtung zur Desodorierung von granulären Kunststoffen nach dem Oberbegriff des Patentanspruchs 1.

Ein eingangs genanntes Verfahren ist aus der EP 2 635 609 B1 bekannt. Dort wird das Produkt vor dem Einfüllen in das Desodorierungssilo mit Fremdenergie erwärmt, was mit einem hohen Energieverbrauch verbunden ist, der zu vermeiden ist. Die EP 2 635 609 B1 verwendet einen vom Desodorierungssilo getrennten Apparat zum Aufheizen des Granulats und ein nach dem Auslass am Desodorierungssilo angeordneten, weiteren Apparat zur Kühlung des ausgelassenen Granulats. Die Energie im Abluftstrom wird allerdings nicht wiederverwendet, sondern einfach über ein Auslassfilter gefiltert und schließlich einer nachgeschalteten thermischen Verwertungseinheit zugeführt, welche eine Entgiftung der ausgelassenen Abgase erbringen soll, wodurch zusätzliche Energie verbraucht wird.

Ein energiesparender Verfahrensablauf zur Aufheizung und Kühlung des Füllvolumens des Desodorierungssilos ist aus dieser Druckschrift nicht zu entnehmen. Ebenso fehlt in dieser Druckschrift ein Hinweis auf die Geruchsbeseitigung bei der Behandlung von ReGranulaten. Solche ReGranulate haben Restverunreinigungen von fremden Polymeren und sind daher besonders kritisch zu verarbeiten. Ein aus der EP 2 635 609 B1 bekannter kontinuierlicher Prozess ist für die Behandlung derartig verunreinigter Granulate (ReGranulate) schwierig zu beherrschen und führt zu unzureichenden Ergebnissen. Wegen der vom Grundgranulat abweichenden Schmelzpunkte der fremden Polymere neigen solche ReGranulate zu unerwünschten Agglomeraten, die mit den Merkmalen der Erfindung - einer absatzweisen Behandlung - gut zu beherrschen sind.

Ein ähnlicher Stand der Technik ist aus der WO2014090856A1 zu entnehmen. In dieser Druckschrift erfolgt die Behandlung des erwärmten Granulats mit Stickstoffgas. Eine energiesparende Aufheizung des Granulats ist aus beiden Druckschriften nicht zu entnehmen.

Die EP 2 635 609 B1 offenbart dabei bereits folgende Prozessschritte:
1. Verfahren zur Desodorierung von Granulaten zur Entfernung flüchtiger organischer Verbindungen (VOC) durch Wärme- und/oder Gasbehandlung, in einem Desodorierungssilo mit den folgenden Verfahrensschritten:
   1.1 Heizen der Granulate auf eine Desodorierungstemperatur bei oder unter dem Erweichungspunkt der ReGranulate;
   1.2 Halten der Granulate auf der Desodorierungstemperatur;
   1.3 Dabei Ausspülen volatiler Materialien in den Granulaten aus dem Desodorierungssilo durch Spülung der Produktfüllung im Desodorierungssilo mittels eines erhitzten Gases;
   1.4 Kühlen der Granulate

Der Erfindung liegt deshalb die Aufgabe zugrunde, mit optimiertem apparativem Aufwand bei Einsparung von wesentlicher Prozessenergie eine verbesserte Entgasung von rezyklierten Kunststoffgranulaten (ReGranulaten) zu ermöglichen.

Zur Lösung der gestellten Aufgabe ist die Erfindung durch ein neuartiges Verfahren und eine das Verfahren ausführende Vorrichtung vorgesehen.

In der Erfindungsbeschreibung werden die Begriffe "Entgasungssilo" und "Desodorierungssilo" synonym verwendet. Dabei wird der Begriff "Entgasungssilo" allgemein für die Hitzebehandlung von granulären Kunststoffen verwendet, während der Begriff "Desodorierungssilo" eine spezielle Ausführungsform eines "Entgasungssilos" ist.

Unter dem Begriff "ReGranulate" werden bevorzugt, jedoch nicht abschließend die Kunststoff-Typen PE-HD, PE-LD, PP, und PS, die aus den Leichtverpackungsabfällen (LVP) wieder dem Herstellungsprozess zugeführt werden, verstanden.

Erfindungsgemäß ist nun vorgesehen, dass die Behandlung der ReGranulate im Entgasungssilo chargen- oder absatzweise erfolgt.

Damit wird ein kontinuierlich stattfindender Durchlaufprozess - wie bei der EP 2 653 609 B1 vermieden und stattdessen eine chargenweise Verarbeitung der ReGranulate vorgeschlagen.

Damit ist der Vorteil einer besonders energiesparenden Behandlung der ReGranulate im Entgasungssilo verbunden.

Es können nun relativ große Volumina von ReGranulaten chargenweise in einem neuartigen Entgasungssilo erhitzt und abgekühlt werden.

Die chargenweise Verarbeitung gestattet eine viel bessere Kontrolle der im Festbett im Entgasungssilo lagernden Produktfüllung, als vergleichsweise ein nur schwer zu kontrollierender kontinuierlicher Durchlaufbetrieb. Aufgrund der Lagerung der Chargenfüllung im Silo-Festbett ist erstmals ein energiesparendes Management der Chargenfüllung im Entgasungssilo möglich.

Eine solche Energieeinsparung ergibt sich in einer bevorzugten Ausführung dadurch, dass bei Spülung der im Festbett liegenden Granulatschüttung zu einem fortgeschrittenen Zeitpunkt des Betriebs mit einem kühlen Spülgas erfolgen kann, und das kühlere Granulat nun bereits aus dem unteren kühlen Konusbereich des Entgasungssilos ausgelassen werden kann und das noch heiße, obere ReGranulat, welches noch nicht gekühlt wurde, langsam mit seinem unteren Kühlübergangsbereich nach unten sinkt und in die untere Kühlzone gelangt und dort weiter abgekühlt wird, ohne dass es erforderlich ist, die gesamte Produktfüllung des Silos zu kühlen.

Hintergrund dieser technischen Lehre ist die Erkenntnis, dass der zwischen der kühlen und der warmen Zone gebildete Wärmeübergangsbereich im ReGranulat nahezu gleich bleibt und lediglich in vertikaler Richtung im Entgasungssilo verschoben wird und dadurch eine Vermischung des ReGranulats bei den verwendeten, niedrigen Durchströmgeschwindigkeiten vermieden wird.

### Prozesstechnische Rahmenbedingungen

Die nachfolgende Prozessbeschreibung definiert die verfahrenstechnische Betriebsweise einer Desodorierungsanlage im Batchbetrieb, einschließlich der zu überwachenden und zu regelnden Betriebszustände und zulässigen Betriebsfenster.

Die wichtigsten Einsatzbereiche sind:
a. Die Geruchsreduzierung von **Re**cycling-**Granulaten (ReGranulate).** Im Bereich der "post-consumer" Kunststoffe sind das hauptsächlich die Kunststoff Typen PE-HD, PE-LD, PP, und PS, die aus den Leichtverpackungsabfällen (LVP) wieder dem Herstellungsprozess zugeführt werden. Nicht betrachtet werden die ReGranulate PET oder PVC.
b. Die Geruchsreduzierung nach der Herstellung von Kunststoffcompounds (Beimischungen von Additiven und Füllstoffen).

Desodorierungsanlagen nach der Erfindung können zum Beispiel als Einzelsysteme ("stand alone") in Neuanlagen eingesetzt werden, aber es ist auch eine Nachrüstung in bestehende Anlagen im Zuge einer "Modernisierung" möglich. Die Kunststoffgranulate werden im vorliegenden System DESO-B batchweise, aber mit einem gleichmäßigen Granulat-Massenstrom der Desodorierungsanlage zugeführt (Beispiel Extruder Abförderung). Die Desodorierung entfernt flüchtige organische Verbindung (VOC) aus den Kunststoffen. Das Kunststoffgranulat wird auf die benötigte Prozesstemperatur (Desodorierungstemperatur) erhitzt und gleichzeitig für eine bestimmte Verweilzeit in einem Desodorierungssilo mit Luft durchspült. Die Luft nimmt die flüchtigen Fremdstoffe auf. Abschließend wird das Produkt für die/den weitere Verarbeitung/Transport gekühlt. Das Desodorierungssystem arbeitet batchweise, da das Entgasungssilo erst mit Granulat befüllt wird und nach dem Degassingprozess wieder komplett entleert wird. Schon während der Befüllung, nach einer Grundbefüllung, wird heiße Luft eingeblasen, die das Granulat erhitzt und gleichzeitig durchspült. Durch Energierückgewinnung werden bessere Wirkungsgrade erzielt.

Die Schüttdichten der Kunststoffgranulate, zum Beispiel der ReGranulate liegen bevorzugt zwischen 500 kg/m³ - 600 kg/m3.

Generell richtet sich die Anlagenauslegung nach dem geforderten Produktmassenstrom, der Batchgröße, den Schüttguteigenschaften und somit nach der benötigten Prozesstemperatur (Desodorierungstemperatur) für eine schnelle und betriebssichere Entgasung. Dabei spielt Energierückgewinnung eine wichtige Rolle.

Die Beschickung der Desodorierungsanlage kann gravimetrisch (Schwerkraft) oder über eine pneumatische Förderung in glatten oder aufgerauten Förderleitungen im Saug- oder Druckbetrieb erfolgen. Häufig erfolgte die Beschickung mit Hilfe einer pneumatischen Flugförderung mit max. 28 m/s Förderluftgeschwindigkeit.

Die Produkttemperatur nach dem Extruder und vor dem Eintritt in die Desodorierungsanlage beträgt normalerweise bevorzugt zwischen +45°C und +60°C.

Die Desodorierungsanlage ist für die Kunststoffgranulate PE-HD, PE-LD, PP, und PS generell geeignet. Die maximal zulässige Temperatur im Prozess ist aber schüttgutabhängig.

Eine Kontamination von Kunststofftypen untereinander sollte ausgeschlossen bzw. minimiert werden. Falls Kunststofftypen mit niedrigerer Erweichungstemperaturen (LDPE, PS usw.) in Kunststofftypen mit höherer Erweichungstemperaturen eingemischt werden, können sich bei höheren Temperaturen Agglomerate bilden, welche durch die erfindungsgemäße Verfahrensführung vermieden werden. Andernfalls sind Anbackungen, Verstopfungen in diesem Fall nicht auszuschließen. Bei kritischen Produkten haben alle Förderleitungen eine aufgeraute Oberfläche. Dadurch wird die Bildung von Engelshaar vermieden, das sich z. B. in der Rohrleitung bei der Förderung Charge A (niedriger Schmelzpunkt) aufgebaut hat und bei Förderung Charge B (hoher Schmelzpunkt) ablöst. Somit könnte eine Produktverschleppung von Charge A in Charge B stattfinden, die mit der erfindungsgemäßen Verfahrensführung vermieden wird.

Mit der Erfindung werden deshalb folgende Vorteile erreicht:
Beim Durchströmen eines als Schüttgut vorhandenen ReGranulats mit geringer Gasgeschwindigkeit ergibt sich eine Wärmeübergangszone im Entgasungssilo, die bei der anfänglichen Füllung des Entgasungssilos mit einem etwas niedrigerem Füllstand ausgebildet wird, wodurch sich beim Durchströmen mit warmem Gas im Silo eine untere Warmzone ergibt, die nach oben zum Deckenbereich hin in eine kühle Zone übergeht. Dieser Übergangsbereich wird als Wärmeübergangsbereich bezeichnet und bei der Erfindung ist bevorzugt, dass während des Befüllens des Silos der Wärmeübergangsbereich, das ist die Zone zwischen dem heißen Bereich der Granulate und dem oberen kühlen Deckenbereich, nach oben in Richtung auf den Deckenbereich wandert.

Daher gibt es keine Vermischung zwischen der kalten und warmen Zone in der Granulatschüttung, weil der Wärmeübergangsbereich stets gleichbleibt und eine Vermischung des Granulates bei den erfindungsgemäß niedrigen Durchströmgeschwindigkeiten vermieden wird.

Vorteil dieser Maßnahme ist, dass es zu einer betriebssicheren Entgasung der rezyklierten Granulate kommt, weil eine Durchmischung von wenig behandeltem Granulat und einem vielfach einer Wärmezone ausgesetzten Granulat vermieden wird. Es kommt also zu einem kontinuierlichen Anstieg des Wärmeübergangsbereich während der Füllung.

Im folgenden Ausführungsbeispiel sind die angegebenen Zeiten und weitere Parameter nur beispielhaft zu verstehen, weil diese vom Füllungsgrad, der Füllgeschwindigkeit, der Chargengröße, der Art des Kunststoffes und anderen Parametern abhängt.

In einer bevorzugten Ausgestaltung wird das Silo zunächst bis zu einem minimalen Füllstand befüllt, was im Bereich von bis zu 10 Stunden erfolgen kann. Im Bereich von 10 Stunden bis 18 Stunden kann optional ein Aufheizen des Siloinhaltes erfolgen, aber auch ein weiteres Befüllen.

Erst ab einem Zustand von 18 Stunden bis zum Beispiel 34 Stunden erfolgt ein Aufheiz- und Entgasungsbetrieb, bei dem vorgesehen ist, dass der Wärmeübergangsbereich langsam von einem unteren Bereich in den Deckenbereich wandert und dabei die zu behandelnden Granulate gleichmäßig und ohne Vermischung durchströmt werden, wodurch es zu einer optimalen Entgasung kommt.

Erst ab einer Lagerzeit von zum Beispiel vorzugsweise 34 Stunden wird der Aufheizungs- und Entgasungsbetrieb eingestellt und dann nur noch gespült. Die Spülung erfolgt vorzugsweise mit Luft. Es können jedoch auch andere Spülgase, wie z.B. Stickstoff oder inerte Gase verwendet werden.

Eine wesentliche Energieeinsparung ergibt sich dadurch, dass nunmehr mit einem kühlen Spülgas gekühlt wird, was bedeutet, dass das gleiche Spülgas, was vorher aufgeheizt wurde nunmehr im nicht aufgeheiztem Zustand zur Kühlung des Granulats und gleichmäßiger Durchströmung des Granulats verwendet wird. Dadurch wandert ab einer Zeit von etwa 34 Stunden nunmehr eine Kühlzone von unten nach oben und die Spülung mit Spülgas wird so lange aufrechterhalten, bis die Kühlzone etwa 1/3 der Schüttungshöhe bis zum Deckenbereich erreicht hat.

Eine wesentliche Energieeinsparung entsteht nun dadurch, dass der obere Teil des im Silo gelagerten Granulats weiterhin mit warmer Luft beaufschlagt bleibt, weil es mit dem durch die Wärme des unten lagernden Granulates aufgewärmten kalten Gas durchströmt wird.

Dies ist ein wesentlicher Fortschritt gegenüber dem Stand der Technik, denn beim Stand der Technik wurde stets die gesamte Füllung des Granulates erwärmt oder gekühlt, was bei der Erfindung nicht notwendig ist und zu wesentlicher Energieeinsparung führt.

Wenn nämlich die Kühlzone etwa 1/3 der Deckenhöhe erreicht hat, kann das kühlere Granulat nun bereits unten aus dem Konusbereich ausgelassen werden und das noch heiße, obere Granulat, welches noch nicht gekühlt wurde, sinkt langsam nach unten und wird in die Kühlzone hineinlaufen und dort weiter abgekühlt werden, ohne dass es erforderlich ist, den gesamten Inhalt, die gesamte Produktfüllung des Silos insgesamt zu kühlen.

Damit erfolgt eine wesentliche Energieeinsparung, denn auch beim Auslassen der Produktfüllung im unteren Bodenbereich ist noch heißes Granulat im Deckenbereich vorhanden, welches während des Auslassvorganges langsam nach unten sinkt und dabei gekühlt wird. Dies ist der entscheidende Vorteil der absatzweisen Behandlung des Granulats in einem Entgasungssilo im Vergleich zu den kontinuierlichen Verfahren, weil bei der absatzweisen Behandlung des GranulatsEnergie eingespart wird. Die hier vorgesehenen Vorrichtungen, die nachfolgend noch beschrieben werden, sind deshalb in ihrem Aufbau apparativ einfacher, haben ein geringeres Bauvolumen und erlauben bei gleicher Entgasungsleistung geringere Bauhöhen bei geringerem Energieverbrauch.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:
Figur 1: perspektivische Darstellung einer Desodorierungsanlage mit Darstellung der Aufgabe- und der Entnahmeebene bei Einbau in einen Stahlbau.
Figur 2: die gleiche Darstellung der Figur 1 unter Weglassung des Stahlbaus
Figur 3: die gleiche Darstellung wie Figur 1 und 2, wobei jedoch die Abfuhr des behandelten Granulats anders gelöst ist und im Übrigen ein Umförderungsbetrieb vom Bodenbereich in den Deckenbereich stattfinden kann.
Figur 4: ein bevorzugtes Verfahrensschema für die absatzweise Behandlung von zu desodorierenden Granulaten.
Figur 5: Darstellung auf der Zeit- und Temperaturachse bei der Produktfüllung im Entgasungssilo.
Figur 6: ein Füllstands-Zeitdiagramm bezüglich der Produktfüllung.

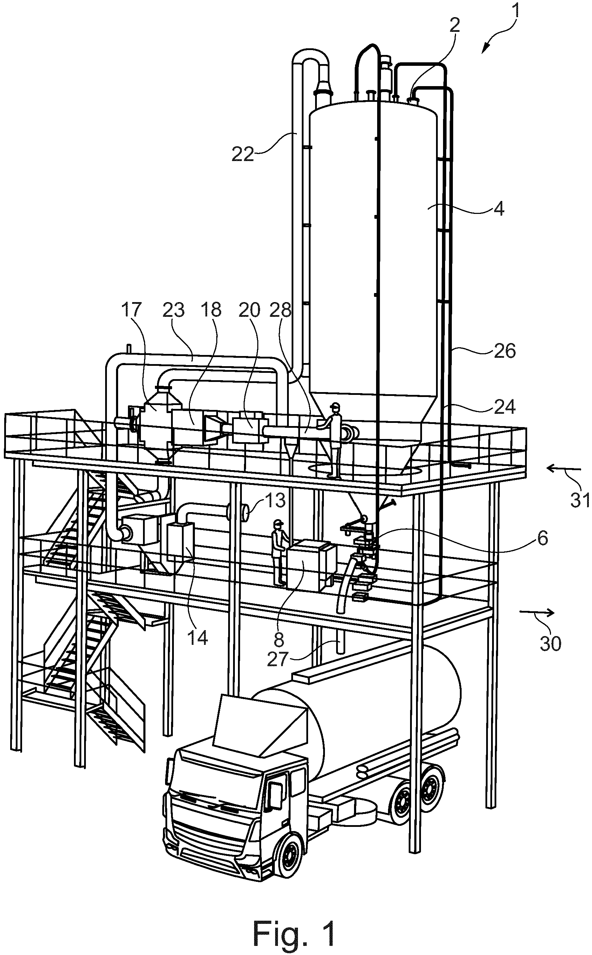

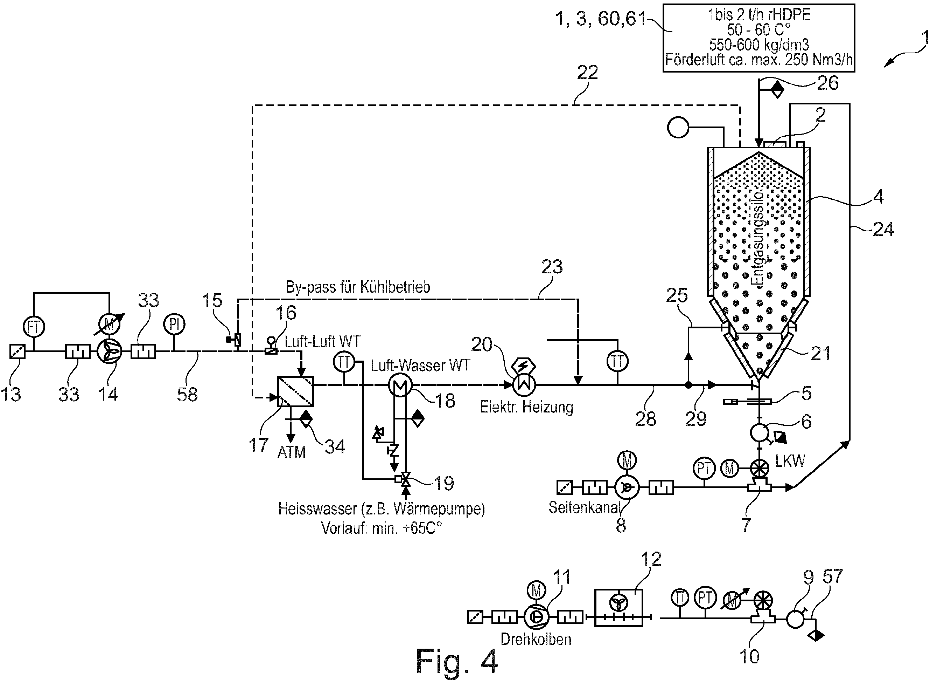

Es werden zunächst bevorzugte Vorrichtungsmerkmale anhand der Figuren 1 bis 4 erläutert. Dabei zeigen die Figuren 1 bis 3 verschiedene Bauformen einer solchen Desodorierungsanlage 1, wobei verschiedene Aggregate gezeigt sind, deren Einbau und Bedeutung aus der Figur 4 zu entnehmen sind. Es wird allgemein die Desodorierung von Granulaten beschrieben. Der einfacheren Beschreibung wegen wird jedoch bevorzugt die Behandlung von ReGranulaten 62 beschrieben, obwohl die Erfindung nicht ausschließlich auf diese besondere Art von Kunststoff-Granulaten beschränkt ist.

### 1 Granulat Zuführung

### 1.1 Granulatbeschickung vom Extruder (Normalbetrieb)

Das Entgasungssilo 4 kann auf verschiedene Arten mit Granulat befüllt werden. Oftmals erfolgt die Befüllung durch ein gravimetrische Befüllung- oder ein Fördersystem, das nicht zur Desodorierungsanlage 1 selbst gehört. Der Granulateintrag sollte gleichmäßig erfolgen.

Bei der gravimetrischen Befüllung fällt das Granulat vordosiert (Bsp. mit einer Schleuse 3, hier nicht grafisch dargestellt) aus einem Vorsystem in das Entgasungssilo 4. Die Schleuse 3 (siehe Fig. 4) verhindert gleichzeitig, dass größere Mengen an heißer Entgasungsluft entgegen der Granulatzuführung in die Umgebung austreten können.

Oftmals erfolgt die Befüllung über eine pneumatische Förderung. Mittels einer pneumatischen Flugförderung kann das Granulat kontinuierlich zwischen einem minimalen und einem maximalen Massenstrom von der Extrusion dem Entgasungssilo 4 zugeführt werden. Das Granulat kann in diesem Fall in einem Zyklon 60 (siehe Fig. 4) von der Förderluft abgetrennt werden und gelangt über eine Zellenradschleuse 3 in das Entgasungssilo (hier nicht grafisch dargestellt). Die Zellenradschleuse 3 läuft hierzu mit erhöhter Drehzahl. Ein Rückstau/Überfüllung durch fehlende/unzureichende Granulatabführung der Ausrüstungen stromabwärts wird durch die Füllstandsmessung im Zyklon 60 überwacht. Eine Unterbrechung der Granulatzufuhr von der Extrusion ist auch bei Ansprechen der Überfüllsicherung im Entgasungssilo 4 erforderlich.

### 1.2 Granulatbeschickung mittels Big-Bags (hier nicht dargestellt, trotzdem von Bedeutung)

Außerhalb des Normalbetriebes (kontinuierlichen Zuführung aus der Extrusion) könnte optional Granulat aus Big-Bags über Saugfördergeräte in den dann notwendigen Vorlagebehälter 61 zugeführt werden (siehe Fig. 4). Hier dient die kontinuierliche Füllstandsmessung und Grenzwerterfassung im optionalen Vorlagebehälter 61 dem Bediener/der Steuerung des Saugfördergerätes als Rückmeldung, wann die Big-Bag-Entleerung zu stoppen ist bzw. rechtzeitig wieder aufzunehmen ist. Dies ist für eine kontinuierliche Zuführung des Granulates in das Entgasungssilo 4 erforderlich. Der Massenstrom für die Versorgung der Anlage mit Big-Bags ist normalerweise reduziert. Die Granulat-Eingangstemperatur aus den Big-Bags ist geringer als bei der kontinuierlichen Zuführung von der "heißen" Extrusion. Das Entgasungssilo 4 benötigt mehr Energie für die Erwärmung.

### 1.3 Granulat Aufheizen im Entgasungssilo

Hauptausrüstungen: Entgasungssilo 4, Zellenradschleuse 7, Konusbereich 21, Umförderung 24 (siehe Fig. 1 - 4)

Beim stetigen Befüllen des Entgasungssilos 4, zu Beginn eines neuen Batches, steht die Schleuse 7 bis zum Erreichen einer Mindestfüllmenge im Entgasungssilo 4. Eine Füllstandsüberwachung verhindert eine Überfüllung des Entgasungssilos 4. Das Entgasungssilo 4 hat einen unteren belüfteten Konusbereich 21 (Belüftungskonus). An zwei vertikal zueinander versetzten Stellen kann Entgasungsluft (warme oder kalte Luft) im unteren und oberen Konusbereich 21 eingeblasen werden. Dabei erwärmt oder kühlt sich das Granulat, beginnend vom untersten Konusabschnitt des Konusbereichs 21 bis in den oberen Bereich des Entgasungssilos 4.

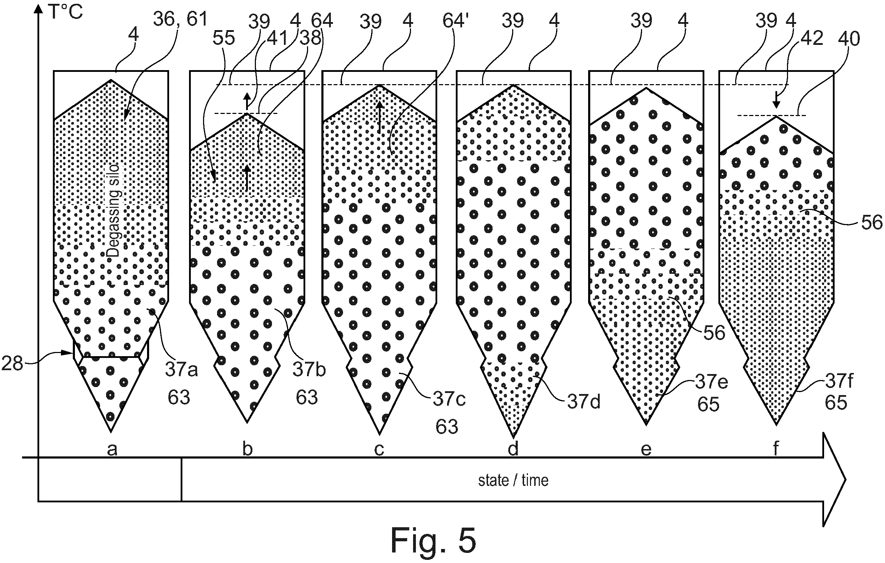

In der Figur 5 wird das Grundprinzip: Befüllung, Aufheizen, Entgasen, Kühlen und Entleerung erläutert.

Das Entgasungssilo 4 erfordert einen Mindestfüllstand des Granulates im unteren Konusbereich 21 für seine Funktion/Erbringung der Heizleistung.

Daher wird das Entgasungssilo 4 bei der Befüllung zuerst ohne Heißluft betrieben. Nach dem das Entgasungssilo 4 etwa zu 30 % befüllt wurde, beginnt der Heizprozess. Über den oberen Teil des Konusbereichs 21 wird heiße Luft in das Entgasungssilo 4 eingeblasen. Die benötigten Desodorierungsluftmengen werden durch Ventile (Klappen) zu den Einblasstellen am Desodorierungssilo 4 geleitet.

Bevorzugt ist, dass das Schüttgut-Festbett durch die aufsteigende Luftmenge nicht gestört wird. Ein einzelnes Granulatkorn sollte in einer stabilen Granulatschicht in einem Schüttgut-Festbett verbleiben. Mischeffekte durch eine Verwirbelungen durch die aufsteigende Luft (Fließbett) müssen vermieden werden, da sonst die Verweilzeit des Granulates nicht bestimmt werden kann.

Während sich das Entgasungssilo 4 langsam mit Granulat füllt, wird gleichzeitig kontinuierlich heiße Luft eingeblasen. Die Granulatfüllung erwärmt sich langsam vom unteren Silobereich in den oberen Bereich hinein. Nachdem das komplette Entgasungssilo 4 befüllt ist, wird der Befüllvorgang gestoppt, aber die Aufheizphase geht weiter. Natürlich kann das Belüftungssilo auch mit einem geringeren Schüttgutvolumen befüllt werden (Teilbefüllung).

Im batchweisen Normalbetrieb wird das Desodorierungssilos 4 mit Granulat befüllt und nicht gleichzeitig entleert. Der Normalzustand ist ein Silo mit ca. min. 95% Füllung.

An einem bevorzugten Beispiel der Desodorierung von 45 t Granulat werden die Prozessschritte erläutert.

In diesem Beispiel wird ein Silo mit einem Massenstrom von 1,5 t/h Granulat befüllt. Die heiße Luft kann in 1 Stunde immer eine Granulatschicht von 1,5 t von 60°C auf 120°C aufheizen.

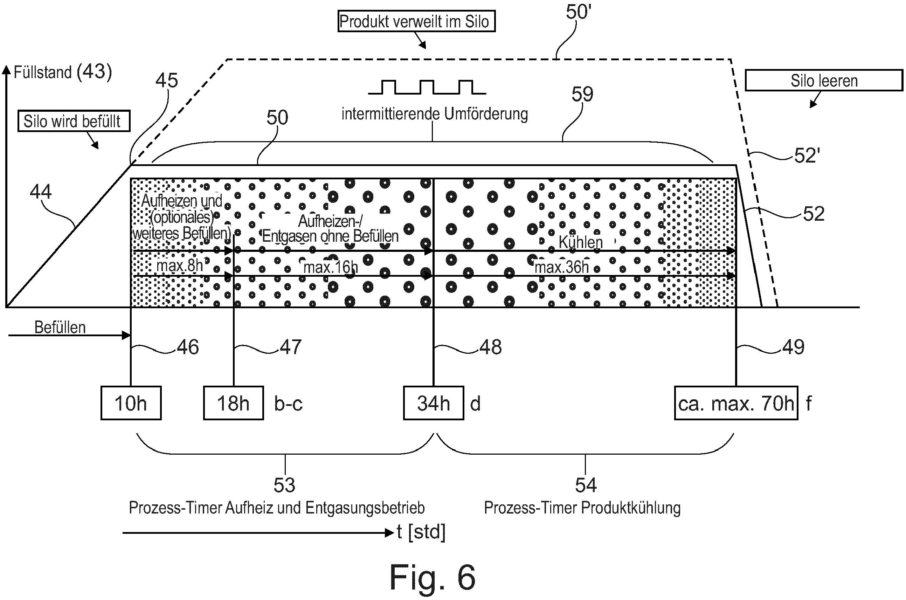

Die Verweilzeit für die geforderte Entgasung bei der Desodorierungstemperatur von 120°C für alle Granulatkörner im Normbetrieb ist in diesem Beispiel 12 h. Damit ergibt sich der oben beschriebene Prozessablauf (siehe Diagramm in Figur 6).

Nachdem die Befüllung des Entgasungssilos gestartet wurde, wird nach 10 Stunden (im Zeitpunkt 46) das Aufheizen begonnen. Zu diesem Zeitpunkt 46 befinden sich 15 t Granulat im Silo. Nach weiteren 10 Stunden (20 Stunden nach Start) befinden sich 30 t Granulat im Silo und 15 t Granulat wurden bereits auf die Desodorierungstemperatur von bevorzugt 120°C erhitzt. Nach 22 Stunden hat theoretisch bereits die unterste Granulatschicht im Entgasungssilo, das ist in Figur 6 die untere Warmzone 63, die geforderte Verweilzeit von 12 Stunden erreicht.

Nach weiteren 10 Stunden (30 Stunden nach Start) befinden sich 45 t Granulat im nun vollen Silo und 30 t Granulat wurden bereits auf die Desodorierungstemperatur von 120°C erhitzt. Davon wurden bereits 12 t länger als 12 Stunden desodoriert. 34 Stunden nach dem Start (Zeitpunkt 48) wird in diesem Beispiel auf die Betriebsweise "Produktkühlung" umgeschaltet. Die Heizzeit betrug bis dahin 24 Stunden. 36 t Granulat wurden auf 120°C aufgeheizt und davon wurde bereits 18 t Granulat (ausgehend vom unteren Konus) länger als 12 Stunden desodoriert. 34 Stunden nach dem Start wird in diesem Beispiel auf die Betriebsweise "Produktkühlung" umgeschaltet. Die Heizzeit (46-48) betrug bis dahin 24 Stunden. 36 t Granulat wurden auf 120°C aufgeheizt und davon wurde bereits 18 t Granulat (ausgehend vom unteren Konus) länger als 12 Stunden desodoriert.

Das obenstehend erläuterte bevorzugte Ausführungsbeispiel wird nun anhand der Figur 5 näher erläutert.

Dabei zeigt die Figur 5 den Temperaturverlauf im Entgasungssilo - sowie die Prozessschritte Aufheizen & Abkühlen

Bei der Betriebsweise "Produktkühlung" ab dem Zeitpunkt 48 (Zustand gemäß Figur 5d) wird kühle Luft in den Konusbereich 21 eingeleitet. Die kühle Luft erwärmt sich am heißen Granulat im unteren Bereich des Entgasungssilos 4 und gibt diese Wärmeenergie an das restliche kühlere Granulat (45 t -36 t = 9 t / < 120°C) im oberen Bereich des Entgasungssilos ab. Die heiße Temperaturzone "bewegt" sich von unten nach oben durch die Granulatschüttung (siehe Figur 5f). Nach weiteren 6 Stunden (40 h nach Start) erreicht auch die oberste Granulatschicht eine Desodorierungstemperatur von etwa 120 °C (siehe Fig. 5d) und nach weiteren 12 Stunden (52 Stunden nach Start) hat jede Granulatschicht die geforderte Verweilzeit von 12 Stunden erreicht (siehe Fig. 5e).

Die gesamte Abkühlzeit ist etwa genau so lang, wie die Aufheizzeit (bevorzugt z.B. 34 Stunden). Somit kann das Entgasungssilo 4 nach max. 70 Stunden mit einem höheren Massenstrom entleert werden.

### 1.3 Umförderung

Ein Verweilen von heißem Granulat ohne Austrag aus dem Desodorierungssilo 4 ist nur für kurze Zeit (ca. max. 30 Minuten) zulässig, da sich im unbewegten Schüttgut-Festbett des Desodorierungssilos Agglomerate bilden (können). Zur Vermeidung ist die temporäre Umförderung mit einer Umförderleitung 24 mit kleinem Fördermassenstrom zu betreiben (Bsp. 200 - 250 kg/h - ggf. intermittierend für jeweils min. 30 Minuten) um das Schüttgut-Festbett zu aktivieren. Bei längerem Stillstand des Siloinhaltes mit heißem Granulat ist die Temperatur der Desodorierungsluft zusätzlich signifikant abzusenken. Dies ersetzt jedoch nicht die Umförderung 24, bis eine hinreichend niedrige Granulattemperatur im ganzen Desodorierungssilo 4 erreicht ist, um eine Agglomeration des Granulates durch hohe Temperaturen und Schüttungsdruck im unbewegten Schüttgutbett (Festbett) auszuschließen. Bei der Umförderung 24 wird das Granulat über eine Zellenradschleuse 7 oder 10 aufgegeben.

### 1.4 Luftversorgung des Desodorierungssilos

Hauptausrüstungen: Filtereinheit 13, Ventilator 14, Ventil "Kühlbetrieb" 15, Ventil "Heizbetrieb" 16, Rekuperator 17, Lufterhitzer Heißwasser 18, Lufterhitzer Elektrische Heizung 20, Desodorierungssilo 4, Belüftungskonus 21, Bypass Leitung 23

### Betriebsweise "Produktaufheizung"

Der Ventilator 14 holt sich seine Ansaugluft über die Filtereinheit 13. Der Massenstrom der Erhitzungsluft sollte unabhängig von den Ansaugtemperaturen des Ventilators 14 konstant gehalten werden und wird daher über einen Volumenstromtransmitter geregelt. Nach dem Ventilator ist das Ventil "Heizbetrieb" 16 geöffnet und das Ventil "Kühlbetrieb" 15 geschlossen. Die Luft wird stromabwärts durch den Rekuperator (Luft/Luft Wärmeaustauscher) 17 vorgewärmt und anschließend in einem oder mehreren Lufterhitzern noch weiter erhitzt. Mögliche Arten der Lufterhitzung 18 sind ein Dampferhitzer (hier nicht dargestellt) oder ein Heißwassererhitzer (z. B. Versorgung über Wärmepumpen) und eine nachgeschaltete Erhitzung durch eine elektrische Heizung 20.

Der Sollwert der Desodorierung-Lufttemperatur ist produktabhängig einstellbar. Die Regelung der Temperatur der Erhitzungsluft erfolgt zum Beispiel über die Regelung der Dampfzuführung (hier nicht dargestellt) oder der Heißwasserzuführung über das Regelventil 19 und die Regelung der Zieltemperatur über die Temperaturregelung der elektrischen Heizung 20.

Die Zieltemperatur darf produktabhängig nicht überschritten werden, um eine Überhitzung/Erweichung des Granulates im Entgasungssilo 4 auszuschließen. Eine zu hohe Lufttemperatur kann zur (lokalen) Erweichung und Agglomeration von Schüttgut im Entgasungssilo 4 führen und kann den Prozess erheblich stören.

Nachdem die heiße Luft durch die Granulatschüttung in den oberen Bereich des Entgasungssilos geströmt ist, wird sie durch das dort befindliche kalte Granulat abgekühlt 8 (siehe Fig. 5b und c). Die mit Geruchsstoffen belastete warme Abluft (Restwärme) kann über die Rückleitung 22 zurück zum Rekuperator 17 geführt werden und dort, wie bereits erläutert, die Ventilatorluft vorwärmen. Dies ist die bevorzugte Energierückgewinnung nach einem Hauptmerkmal der Erfindung. Anschließend gelangt sie in die optionale Abluftbehandlung.

Die Desodorierungsluftmenge ist zwischen einem minimalen und einem maximalen Wert einstellbar. Die minimale Luftmenge ergibt sich aus der folgenden thermischen Berechnung: Wie groß muss die minimale Luftmenge sein, um zum Beispiel 1,5 t/h Kunststoffgranulat von 60°C auf 120° zu erhitzen? In diesem Beispiel wurde ein Luftvolumenstrom von 3.300 Nm³/h ermittelt. Es gibt aber auch eine maximale Luftmenge. Sie beschreibt die maximale Luftmenge, die in den Konusbereich 21 (Belüftungskegel) eines Desodorierungssilos 4 mit einer bestimmten Größe einströmen darf, da sonst das Schüttgut-Festbettverhalten im Desodorierungssilo 4 durch eine zu hohe Anströmgeschwindigkeit gestört wird.

### Betriebsweise "Produktkühlung"

Für die Produktkühlung wird nach dem Ventilator 14 das Ventil "Heizbetrieb" 16 geschlossen und das Ventil "Kühlbetrieb" 15 geöffnet. Somit umgeht die Bypass-Leitung 23 die Heizelemente und die kühle Luft kann direkt nach dem Ventilator 14 in den Belüftungskonus 21 einströmen.

### 1.5 Abförderung aus dem Desodorierungssilo

Hauptausrüstungen: Desodorierungssilo 4, Schieber 5, Gebläse 8, Zellenradschleusen 7 oder 10, Luftkühler (optional) 12, Rohrweiche 6 oder 9

Die Granulatabförderung aus dem Desodorierungssilo, nach der Produktkühlung, kann auf zwei verschiedene Weisen erfolgen.

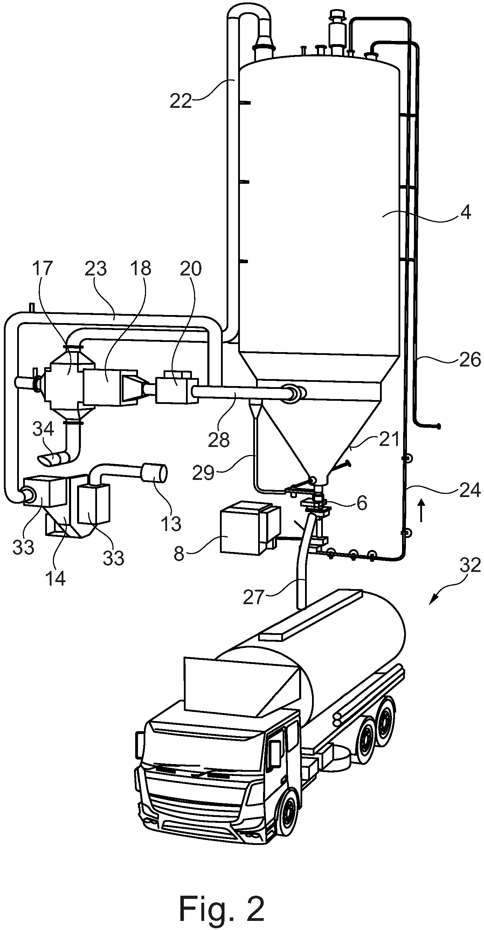

Option 1: Bei der gravimetrische LKW-Verladung (siehe Figur 1 und 2) wird die Rohrweiche 6 auf den schrägen Abgang geschaltet. Der Schieber 5 öffnet die Fallleitung und das abgekühlte Granulat kann in einen darunter stehenden LKW 32 sehr schnell entleert werden. Die Rohrweiche 6 ist oberhalb der Zellenradschleuse 7 angeordnet. In diesem Beispiel wird die Zellenradschleuse 7 nur für die oben beschriebene Umförderung 24 eingesetzt. Aufgrund des geringen Massenstromes bei der Rezirkulation, kann eine kleine Schleuse 7, mit einer festen Drehzahl, eingesetzt werden. Da der Förderdruck und der Fördervolumenstrom bei der Umförderung 24 sehr gering sind, kann zum Beispiel ein einfaches Seitenkanalgebläse verwendet werden.

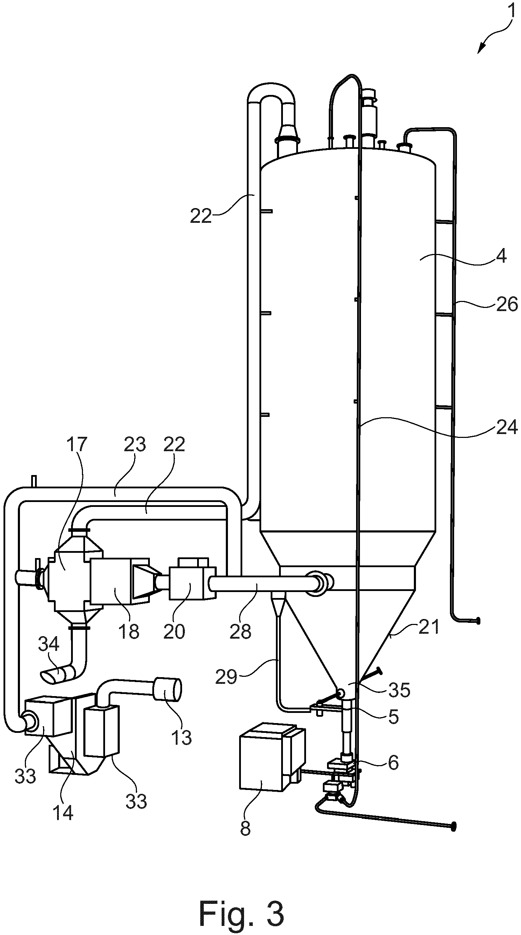

Option 2: Bei der Abförderung mit Hilfe eine pneumatischen Förderung (siehe Figur 3) dosiert die Zellenradschleuse 10 das Granulat in die Förderleitung. Die Förderentfernung und der geforderte Massenstrom bestimmen den Förderdruck und den Luftvolumenstrom, der durch ein Drehkolbengebläse 11 (siehe Figur 4) oder durch eine Gebläse 8 (siehe Figur 3) aufgebracht werden muss. Bei höheren Förderdrücken muss die Gebläseluft durch einen Luftkühler 12 heruntergekühlt werden. Nach der Schleuse 10 ist auch eine Rohrweiche 9 eingebaut. Die Schleuse muss mit einer niedrigen Schleusendrehzahl das Granulat mit einem geringen Massenstrom zurück in das Entgasungssilo über die Umförderleitung 24 umfördern, oder mit einem höheren Massenstrom das Granulat in ein nachfolgende System abtransportieren. Daher wird die Schleuse 10 über einen Frequenzumformer drehzahlgeregelt (max. Drehzahlverhältnis 1:7).

### 2. Beschreibung der Vorrichtungsmerkmale anhand der Figuren 1-4

Insgesamt ist die Desodorierungsanlage mit 1 bezeichnet und besteht im Wesentlichen aus einem Entgasungssilo 4, in dessen Konusbereich 21 eine Spülgasleitung 28 hineinführt, die im Konusbereich 21 in eine Hauptgasleitung 25 und in eine Nebengasleitung 29 aufgeteilt ist. Die Nebengasleitung 29 ist in den Spitzenbereich des Konus eingeführt, während die Hauptgasleitung 25. in den Konusbereich 21 an mehreren, gleichmäßig am Umfang verteilten Einblasstellen einmündet.

Das Produkt wird gemäß den Figuren 1 und 2 auf der Zufuhrebene 31 aufgegeben, wobei die Aufgabe über eine Füllleitung 26 erfolgt, die in einen oberen deckenseitigen Einfüllstutzen 2 in das Entgasungssilo 4 mündet. Der Konusbereich 21 des Entgasungssilos 4 ist nach unten durch einen Schieber 5 abgeschlossen, an den sich auslaufseitig eine Rohrweiche 6 anschließt, die oberhalb einer Zellenradschleuse 7 angeordnet ist.

Es wird ein Gebläse 8 zur Umförderung des Produktes im Entgasungssilo 4 verwendet, wobei ein Luftstrom über das Gebläse 8 und zugeordnete Schalldämpfer in die Umförderleitung 24 mündet und dafür sorgt, dass in bestimmten Schaltzuständen des Schiebers 5, der Rohweiche 6 und der Zellenradschleuse 7 das aus dem Konusbereich 21 nach unten aus dem Siloauslass 35 ausfließende Produkt wieder zurück in den Deckenbereich des Entgasungssilos 4 über die Umförderleitung 24 gefördert werden kann.

Alternativ ist ein alternativer Umförderbetrieb in der unteren Darstellung in Figur 4 zeichnerisch dargestellt, bei dem anstatt des Gebläses 8 ein Drehkolbengebläse 11 verwendet wird, welches eine wesentlich höhere Leistung hat und das über einen optional vorhandenen Luftkühler 12 und eine Zellenradschleuse 10, sowie eine Rohweiche 9 einen Auslaß 57 versorgt, über den das behandelte Produkt im Wege einer pneumatischen Förderung direkt in einen Zwischenbehälter oder in eine Absackanlage eingeleitet werden kann.

Nachfolgend wird die Erzeugung des Heißgases in der ein heißgasführenden Spülgasleitung 28 beschrieben.

Über die Filtereinheit 13 wird Frischluft angesaugt und in einen ersten Schalldämpfer 33 gefördert, der vor einem Ventilator 14 sitzt, an dessen Auslaßseite ein weiterer Schalldämpfer 33 angeordnet ist. Die so erzeugte Luft oder das so erzeugte Gas wird über die Gasleitung 58 einem Rekuperator 17 zugeführt, der bevorzugt als Kreuzwärmetauscher ausgebildet ist und der das Heißgas aus der Abluftleitung 22 aufnimmt und dabei die Luft aus der kühlen Gasleitung 58 aufwärmt.

Die Abluftleitung wird dann aus dem Rekuperator 17 in den Abluftstutzen 34 geleitet, wo ein Schalldämpfer angeordnet sein kann und ggf. ein Auslassfilter und ggf. eine Abgasbehandlung stattfinden kann.

Ein bevorzugtes Merkmal der Erfindung ist die Energieeinsparung durch den hier dargestellten Rekuperator 17, weil damit eine Vorwärmung der Spülluft in der Spülgasleitung 28 stattfindet. Als weitere Maßnahme zur Aufheizung wird bevorzugt ein Luft-Wasserwärmetauscher verwendet, der auch als Lufterhitzer 18 bezeichnet ist und über dessen Regelventil 19 ein Heißwasser zugeführt werden kann. Das Heißwasser stammt bevorzugt aus einer Wärmepumpe und hat eine bevorzugte Vorlauftemperatur von minimal 65 Grad Celsius.

Am Ausgang des Lufterhitzers 18 wird die so vorerwärmte Luft oder das Gas in einen optional vorhandenen elektrischen Lufterhitzer 20 eingeleitet, wonach am Ausgang des elektrischen Lufterhitzers 20 ein hochtemperiertes Heißgas in der Spülgasleitung 28 vorhanden ist.

Das hochtemperierte Spülgas wird über die Hauptgasleitung 25 in den Konusbereich 21 des Entgasungssilos 4 eingeführt und über eine Nebengasleitung 29 wird ein geringerer Luft- oder Gasanteil in den Konusspitzenbereich eingeleitet, um auch eine Durchspülung des im Konusbereich 21 unten liegenden Granulats zu ermöglichen.

Gemäß Figur 1 kann am Auslauf des Entgasungssilos 4 stromabwärts der Rohrweiche 6 ein Auslaufrohr 27 angeschlossen sein, welches zur Befüllung eines Silofahrzeuges 32 dient, wie in Figur 1 und 2 dargestellt.

Die Figur 3 zeigt als zusätzliches Merkmal einen optionalen Umwälz- oder Umspülbetrieb des behandelten Granulats, weil aufgrund der Ansteuerung des Gebläses 8 und der Rohweiche 6 nun stromabwärts der Rohrweiche 6 ein Ventil angeordnet ist über welches das behandelte Granulat 24 wieder nach oben gefördert wird, um in den Deckenbereich des Entgasungssilos 4 eingefüllt zu werden.

Nach einer bestimmten Zeitdauer des Heizbetriebes wird in den Kühlbetrieb umgeschaltet. Hierzu ist vorgesehen, dass eine Bypassleitung 23 von der kühlen Gasleitung 58 abzweigt und ventilgesteuert in die Heißgas führende, Spülgasleitung 28 eingeleitet werden kann, sodass auch ein kühles Gas in die Spülgasleitung 28 gemäß Figur 4 zwecks Kühlung des Entgasungssilos 4 eingefüllt werden kann. Zur Umschaltung in den Kühlbetrieb wird das Ventil 15 angesteuert. Ebenfalls ist ein Ventil 16 für den Heizbetrieb vorhanden, sodass vom Heizbetrieb auf den Kühlbetrieb ventilgesteuert umgeschaltet werden kann.

Anhand der Figuren 5 und 6 wird die besondere Verfahrensweise für die absatzweise oder chargenweise Desodorierung derartiger rezyklierter Granulate beschrieben.

In Figur 6 sind auf der Ordinate der Füllstand 43 und auf der Abszisse die Zeitdauer in Stunden dargestellt. Alle angegebenen Parameter sind lediglich bevorzugte Werte, welche veränderbar sind und die lediglich das Ausführungsbeispiel beschreiben.

Figur 6 zeigt, dass vom Zeitpunkt 0 zunächst das Entgasungssilo 4 entlang einer Geraden 44 linear gefüllt wird, was eine Zeitdauer von der Zeit 0 bis etwa 10 Stunden zwischen den Zeitpunkten 46 und 47 dauern kann, bis ein Mindestfüllstand 50 im Scheitelpunkt 45 erreicht ist.

Die gestrichelte Linie, welche die Gerade 44 verlängert, sagt aus, dass der Füllstand noch weiter angehoben werden kann, um einen Maximalfüllstand 50' zu erlauben. Im gezeigten Ausführungsbeispiel wird jedoch nur ein Mindestfüllstand 50 vorgesehen.

Nach etwa Zeit 10 Stunden Füllzeit (Zeitpunkt 46) ist ein Zustand nach Figur 5b erreicht.

Ab der Füllzeit im Zeitpunkt 46 erfolgt eine Aufheizung des Granulats von unten nach oben (siehe Fig. 5b und c). Dabei bildet sich zwischen der unteren Warmzone 63 und der oberen kühlen Zone 64 ein Wärmeübergangsbereich 55. Die Aufheizung der Produktfüllung 36 schreitet weiter von Figur 5b nach Figur 5c fort, wodurch der Wärmeübergangsbereich 55 in Pfeilrichtung in Richtung auf den Deckenbereich wandert, was in Figur 6 mit dem Zeitpunkt 47 dargestellt ist. Daraus ergibt sich, dass zwischen den Zeitpunkten 46 und 47 sowohl eine Befüllung als auch eine gleichzeitige Aufheizung des Volumens stattfindet.

Wesentlich für das Verständnis der erfindungsgemäßen Lehre ist, dass während der Befüllung der Wärmeübergangsbereich 55 zwischen dem heißen unteren Granulat und einem kühleren oberen Granulat in der oberen kühlen Zone 64 vorhanden ist. Der Wärmeübergangsbereich 55 bildet sich demnach zwischen den beiden Granulatzonen vom unteren heißen Granulat 62 zum oberen kühlen Granulat und wandert langsam nach oben in den Deckenbereich (siehe den Übergang von Fig. 5b auf Fig. 5c).

Die Wanderung des Wärmeübergangsbereichs 55 in Richtung auf die Decke des Entgasungssilos 4 erfolgt zwischen den Zeitpunkten 47 und 48 in Figur 6, wozu bevorzugt beispielsweise insgesamt eine Zeitdifferenz zwischen 34 minus 18 Stunden = 16 Stunden verwendet wird.

Daraus ergibt sich, dass im Übergang von der Figur 5b auf Figur 5c die Füllstandslinie 38 der Granulatfüllung 36 in Pfeilrichtung 41 nach oben wandert, bis der Füllstand eine maximale Füllstandslinie 39 erreicht hat, wie dies in Figur 5 c dargestellt ist.

In diesem Zustand der Figur 5c ist auch der Wärmeübergangsbereich 55 in den Deckenbereich gewandert, was dem Zeitpunkt 48 in Figur 6d entspricht.

Damit ist der maximale Füllstand im Entgasungssilo 4 erreicht und die Heißluft- oder Heißgas-Behandlung des Granulats erfolgt bevorzugt während der gesamten Zeit 46-48, obwohl im Deckenbereich noch eine kühle Zone 64 des Granulats gemäß Figur 5c vorhanden ist, die jedoch nicht stört, weil diese kühle Zone 64 nachfolgend weiter behandelt wird und zwar unter Einsparung von Energie, wie es beim Stand der Technik bisher nicht bekannt war.

Es wird nun bevorzugt, wenn im Zustand der Figur 5d und im Zeitpunkt 48 nunmehr auf Kühlbetrieb umgeschaltet wird und sich dabei im unteren Konusbereich 21 schon kühles Granulat im Bereich einer Kühlzone 65 bildet, während die Kühlübergangsbereich 56 langsam - entsprechend den Figuren 5e und 5f - nach oben wandert. Die Kühlzone 65 mit ihrem Kühlübergangsbereich 56 wandert nach oben, ohne den Deckenbereich zu erreichen. Dies ist ein wesentlicher Vorteil gegenüber dem Stand der Technik, denn oberhalb des Kühlübergangsbereichs 56 in Figur 5f findet sich noch im oberen Bereich heißes Granulat, welches jedoch nicht mehr unter großem Energieaufwand gekühlt wird, sondern dieses Granulat kühlt sich selbststätig beim Auslass des unteren kalten Granulats in Figur 5f im gekühlten Konusbereich 21 und an den unteren kühlen Wänden des Entgasungssilos 4 ab.

Dies ist in Figur 6 im Zeitpunkt 49 dargestellt. Es wird gemäß Figur 5f nach und nach das kalte Granulat ausgelassen. Unter Beibehaltung des Kühlbetriebes sinkt die Füllstandslinie 40 nach unten in Pfeilrichtung 42, sodass das obere heißere Granulat in den nun kalten Konusbereich 21 kommt und dabei auch abgekühlt wird.

Die Erfindung hat deshalb den Vorteil gegenüber dem Stand der Technik, dass trotz des Vorhandenseins von heißem Granulat ein Kühlbetrieb stattfindet und das heiße Granulat, welches im Deckenbereich lagert, erst mit Absinken der Füllstandslinie 40 nach unten kommt und dabei ebenfalls an den gekühlten Wänden im Innenraum des Entgasungssilos 4 abgekühlt wird. Damit werden wesentliche Energiemengen eingespart, was beim Stand der Technik nicht der Fall ist.

Die Figur 6 zeigt außerdem mit einer Linie 59, dass während der gesamten Zeiten eine intermittierende Umförderung des Produktes vom Konusspitzenbereich in den Deckenbereich stattfinden kann, jedoch nicht lösungsnotwendig ist. Dies verhindert, dass das Produkt im Konusbereich 21 kompaktieren kann.

Hieraus ergibt sich, dass bei einer bevorzugten, insgesamt vorhandenen Behandlungszeit von maximal 70 Stunden rezyklierte Kunststoffgranulate optimal behandelt werden können und zwar mit geringem Energieaufwand, geringer Geräuschentwicklung und niedrigem Vorrichtungsaufwand, der bisher nur mit wesentlich größeren Vorrichtungen bewältigt werden konnte.

**Zeichnungslegende**

| | | | |
|---|---|---|---|
| 1. | Desodorierungsanlage | 31. | Zufuhrebene |
| 2. | Einfüllstutzen | 32. | Silofahrzeug |
| 3. | Zellenradschleuse | 33. | Schalldämpfer |
| 4. | Entgasungssilo | 34. | Abluftstutzen |
| 5. | Schieber | 35. | Siloauslaß |
| 6. | Rohrweiche | 36. | Produktfüllung |
| 7. | Zellenradschleuse | 37. | Temperaturverteilung a-f |
| 8. | Gebläse | 38. | Füllstandslinie |
| 9. | Rohrweiche | 39. | Füllstandslinie |
| 10. | Zellenradschleuse | 40. | Füllstandslinie |
| 11. | Drehkolbengebläse | 41. | Pfeilrichtung |
| 12. | Luftkühler (optional) | 42. | Pfeilrichtung |
| 13. | Filtereinheit | 43. | Füllstand |
| 14. | Ventilator | 44. | Gerade |
| 15. | Ventil (Kühlbetrieb) | 45. | Scheitelpunkt |
| 16. | Ventil (Heizbetrieb) | 46. | Zeitpunkt |
| 17. | Rekuperator | 47. | Zeitpunkt |
| 18. | Lufterhitzer | 48. | Zeitpunkt |
| 19. | Regelventil | 49. | Zeitpunkt |
| 20. | Lufterhitzer (Elektro) | 50. | Mindestfüllstand |
| 21. | Konusbereich | 50' | Maximalfüllstand |
| 22. | Abluftleitung | 52. | Entleerungskurve 52' |
| 23. | Bypassleitung | 53. | Prozessschritt |
| 24. | Umförderleitung | 54. | Prozessschritt |
| 25. | Hauptgasleitung | 55. | Wärmeübergangsbereich |
| 26. | Füllleitung | 56. | Kühlzone |
| 27. | Auslaufrohr | 57. | Auslaß |
| 28. | Spülgasleitung | 58. | Gasleitung |
| 29. | Nebengasleitung | 59. | Intermitterende Umförderung |
| 30. | Abförderebene | 60. | Zyklon |
| 62 | ReGranulat | 61 | Vorlagebehälter |
| 63 | Warmzone (unten) | 64 | kühle Zone (oben) |
| 65 | Kühlzone (unten) | | |

## Patentansprüche

1. Verfahren zur Desodorierung von Granulaten zur Entfernung flüchtiger organischer Verbindungen (VOC) durch Wärme- und/oder Gasbehandlung in einem Entgasungssilo (4) mit folgenden Verfahrensschritten:
1.1 Heizen der Granulate im Entgasungssilo (4) auf eine Desodorierungstemperatur, die bei oder unter dem Erweichungspunkt der Granulate liegt;
1.2 Halten der Granulate auf der Deodorierungstemperatur;
1.3 Ausspülen volatiler Materialien aus den Granulaten aus dem Entgasungssilo (4) durch Spülung der Produktfüllung (36) im Entgasungssilo (4) mittels eines erhitzten Spülgases;
1.4 Kühlen der Granulate
**dadurch gekennzeichnet, dass**
dass eine Desodorierung von ReGranulaten (62) erfolgt und dass die Behandlung der ReGranulate (62) im Entgasungssilo (4) chargen- oder absatzweise erfolgt.

2. Verfahren nach Anspruch 1, **dadurch gekennzeichnet, dass** eine Energieeinsparung bei der Aufheizung des Spülgases dadurch erfolgt, dass das Abgas des Entgasungssilos (4) zur Aufheizung des Spülgases genutzt wird.

3. Verfahren nach Anspruch 1 oder 2, **dadurch gekennzeichnet, dass** das ReGranulat (62) auf die benötigte Desodorierungstemperatur innerhalb einer Verweilzeit (46-48) durch Spülung mittels Spülgas erhitzt wird und dass anschließend innerhalb einer weiteren Verweilzeit (48-49) mit einem gekühlten Spülgas gespült wird.

4. Verfahren nach einem der Ansprüche 1 bis 3, **dadurch gekennzeichnet, dass** das Verfahren batchweise arbeitet und dass das Entgasungssilo (4) zur Desodorierungsbehandlung schrittweise mit dem ReGranulat (62) befüllt wird und nach der Desodorierungsbehandlung komplett entleert wird.

5. Verfahren nach einem der Ansprüche 1 bis 4, **dadurch gekennzeichnet, dass** nach einer anfänglichen Grundbefüllung des Entgasungssilos (4) mit dem ReGranulat (62) eine Einleitung des erhitzten Spülgases während der weiteren Befüllung stattfindet.

6. Verfahren nach einem der Ansprüche 1 bis 5, **dadurch gekennzeichnet, dass** die bevorzugten Schüttgutdichten der ReGranulate (62) im Bereich zwischen 500 kg/m³ - 600 kg/m3 liegen.

7. Verfahren nach einem der Ansprüche 1 bis 6, **dadurch gekennzeichnet, dass** die bevorzugte Eintrittstemperatur der ReGranulate (62) in das Entgasungssilos (4) im Bereich zwischen+45°C und +60°C liegt.

8. Verfahren nach einem der Ansprüche 1 bis 7, **dadurch gekennzeichnet, dass** das Entgasungssilo (4) bei der anfänglichen Füllung in einem Zeitraum (46-47) mit einem niedrigerem Füllstand (38) befüllt wird und dass sich beim Durchströmen des ReGranulats (62) mit dem heißen Gas bei geringer Gasgeschwindigkeit eine untere Warmzone (63) ergibt, die nach oben zum Deckenbereich hin in eine kühle Zone (64) übergeht.

9. Verfahren nach einem der Ansprüche 1 bis 8, **dadurch gekennzeichnet, dass** zwischen der unteren Warmzone (63) und der kühlen Zone (64) ein Wärmeübergangsbereich (55) gebildet ist, der während des Befüllens des Entgasungssilos (4) in Richtung auf den Deckenbereich des Entgasungssilos (4) wandert.

10. Verfahren nach einem der Ansprüche 1 bis 9, **dadurch gekennzeichnet, dass** der zwischen der kühlen (64) und der warmen Zone (63) gebildete Wärmeübergangsbereich (55) im ReGranulat (62) gleichbleibt und lediglich in vertikaler Richtung im Entgasungssilo (4) verschoben wird und dadurch eine Vermischung des ReGranulats (62) bei den niedrigen Durchströmgeschwindigkeiten vermieden wird.

11. Verfahren nach einem der Ansprüche 1 bis 10, **dadurch gekennzeichnet, dass** das Entgasungssilo (4) in einem bevorzugten Bereich von bis zu 10 Stunden zunächst bis zu einem minimalen Füllstand (38) befüllt wird, und dass in einem Zeitbereich (46-47) von bevorzugt 10 Stunden bis 18 Stunden ein Aufheizen des Siloinhaltes erfolgt, und dass in diesem Zeitbereich (46-47) eine weitere Befüllung stattfinden kann.

12. Verfahren nach einem der Ansprüche 1 bis 11, **dadurch gekennzeichnet, dass** in einem weiteren Zeitbereich (47-48) von bevorzugt 18 Stunden bis 34 Stunden ein Aufheiz- und Entgasungsbetrieb erfolgt, bei dem der Wärmeübergangsbereich (55) von einem unteren Bereich in den Deckenbereich des Entgasungssilos (4) wandert und dabei die zu behandelnden ReGranulate (62) gleichmäßig und ohne Vermischung durchströmt werden, wodurch es zu einer optimalen Entgasung kommt.

13. Verfahren nach einem der Ansprüche 1 bis 13, **dadurch gekennzeichnet, dass** erst ab einer Lagerzeit (48) von vorzugsweise 34 Stunden der Aufheizungs- und Entgasungsbetrieb eingestellt und dann nur noch bis zu einem Zeitraum (49) von bevorzugt 70 Stunden gespült wird.

14. Verfahren nach einem der Ansprüche 1 bis 13, **dadurch gekennzeichnet, dass** sich eine Energieeinsparung dadurch ergibt, dass gegen Ende der Aufheizzeit (48) mit einem kühlen Spülgas gekühlt wird, und dass das gleiche Spülgas, was vorher aufgeheizt wurde nunmehr im nicht aufgeheiztem Zustand zur Kühlung des Granulats bei gleichmäßiger Durchströmung des Granulats verwendet wird.

15. Verfahren nach Anspruch 14, **dadurch gekennzeichnet, dass** durch die Spülung mit einem kühlen Spülgas am Ende der Aufheizzeit (48) von bevorzugt 34 Stunden nunmehr eine untere Kühlzone (65) von unten nach oben durch das ReGranulat (62) wandert und die Spülung mit Spülgas so lange aufrechterhalten wird, bis die Kühlzone (65) bevorzugt etwa 1/3 der Schüttungshöhe und/oder der Silohöhe bis zum Deckenbereich erreicht hat.

16. Verfahren nach einem der Ansprüche 13 bis 15, **dadurch gekennzeichnet, dass** bei erfolgender Spülung mit einem kühlen Spülgas, wenn die untere Kühlzone (65) etwa 1/3 der Schüttungshöhe und/oder der Deckenhöhe erreicht hat, das kühlere Granulat (62) nun bereits aus dem unteren kühlen Konusbereich (21) ausgelassen wird und das noch heiße, obere ReGranulat (62), welches noch nicht gekühlt wurde, langsam mit seinem unteren Kühlübergangsbereich (56) nach unten sinkt und in die untere Kühlzone (65) gelangt und dort weiter abgekühlt wird, ohne dass es erforderlich ist, die gesamte Produktfüllung des Silos zu kühlen.

17. Vorrichtung zur Desodorierung von ReGranulaten (62) zur Entfernung flüchtiger organischer Verbindungen (VOC) durch Wärme- und/oder Gasbehandlung in einem von Spülgas durchströmten Entgasungssilo (4), welches einen unteren Konusbereich (21) aufweist
**dadurch gekennzeichnet, dass**
die Behandlung der ReGranulate (62) im Entgasungssilo (4) chargen- oder absatzweise erfolgt.

18. Vorrichtung nach Anspruch 17, **dadurch gekennzeichnet, dass** in den oberen Bereich des Konusbereichs (21) des Entgasungssilos (4) eine das Spülgas führende Spülgasleitung (28) mündet und dass von dieser Spülgasleitung (28) eine Nebengasleitung (29) abzweigt, die in den Konusspitzenbereich mündet.

19. Vorrichtung nach einem der Ansprüche 17 oder 18 zur Ausführung des Verfahrens nach einem oder mehreren der Ansprüche 1 bis 16, **dadurch gekennzeichnet, dass** das Entgasungssilo (4) mit ca. min. 95% Füllung gefüllt ist, dass eine ReGranulat-Masse von bevorzugt 45 t Granulat vorhanden ist, und dass das Entgasungssilo (4) mit einem Massenstrom von 1,5 t/h Granulat befüllbar ist, und dass das heiße Spülgas in 1 Stunde eine Granulatschicht von bevorzugt 1,5 t von einer bevorzugten Temperatur von 60°C auf 120°C aufheizt.

20. Vorrichtung nach einem der Ansprüche 17 bis 19, **dadurch gekennzeichnet, dass** die Verweilzeit für die geforderte Entgasung bei der Desodorierungstemperatur von bevorzugt 120°C für alle Granulatkörner im Norm betrieb bevorzugt 12 h ist.

21. Vorrichtung nach einem der Ansprüche 19 bis 20, **dadurch gekennzeichnet, dass** zur Vermeidung von ReGranulat-Agglomeraten eine temporäre Umföderung mit einer Umförderleitung (24) vorhanden ist, welche einen Produktumlauf vom Auslaß des Entgasungssilos (4) in den Deckenbereich vorsieht.

22. Vorrichtung nach einem der Ansprüche 17 bis 21, **dadurch gekennzeichnet, dass** im Heizbetrieb das von einem Ventilator (14) angesaugte kühle Spülgas in einem Rekuperator (17) vorwärmbar ist und dass der Rekuperator (17) mit der aus dem Deckenbereich des Entgasungssilos (4) abgeführten Abgasleitung (22) heizbar ist.

23. Vorrichtung nach Anspruch 22, **dadurch gekennzeichnet, dass** die vom Rekuperator (17) vorgewärmte Luft in anschließenden in einem oder mehreren Lufterhitzern erhitzbar ist.

24. Vorrichtung nach einem der Ansprüche 17 bis 23, **dadurch gekennzeichnet, dass** für den Kühlbetrieb von der die kühle Luft führenden Gasleitung (58) eine Bypassleitung (23) abzweigt, welche ventilgesteuert in die Spülgasleitung (28) einmündet.

## Geänderte Patentansprüche

### Geänderte Patentansprüche gemäss Regel 137(2) EPÜ.

1. Verfahren zur Desodorierung von Granulaten zur Entfernung flüchtiger organischer Verbindungen (VOC) durch Wärme- und Gasbehandlung in einem Entgasungssilo (4) mit folgenden Verfahrensschritten:
1.1 Heizen der Granulate im Entgasungssilo (4) auf eine Desodorierungstemperatur, die kleiner gleich dem Erweichungspunkt der Granulate ist;
1.2 Halten der Granulate bei einer, insgesamt vorhandenen Behandlungszeit von maximal 70 Stunden auf der Desodorierungstemperatur;
1.3 Ausspülen volatiler Materialien aus den Granulaten aus dem Entgasungssilo (4) durch Spülung der Produktfüllung (36) im Entgasungssilo (4) mittels eines erhitzten Spülgases;
1.4 Kühlen der Granulate, wobei
die Granulate rezyklierte Kunststoffgranulate (62) sind, deren Behandlung im Entgasungssilo (4) chargenweise erfolgt, **dadurch gekennzeichnet, dass** eine Energieeinsparung bei der Aufheizung des Spülgases dadurch erfolgt, dass das Abgas des Entgasungssilos (4) zur Aufheizung des Spülgases genutzt wird und dass das rezyklierte Kunststoffgranulat (62) auf die benötigte Desodorierungstemperatur innerhalb einer Verweilzeit (46-48) durch Spülung mittels Spülgas erhitzt wird und anschließend innerhalb einer weiteren Verweilzeit (48-49) mit einem gekühlten Spülgas gespült wird.

2. Verfahren nach Anspruch 1, **dadurch gekennzeichnet, dass** das kühlere Granulat aus dem unteren kühlen Konusbereich des Entgasungssilos ausgelassen wird und das noch heiße, obere rezyklierte Kunststoffgranulat, welches noch nicht gekühlt wurde, langsam mit seinem unteren Kühlübergangsbereich nach unten sinkt und in die untere Kühlzone gelangt und dort weiter abgekühlt wird, ohne dass es erforderlich ist, die gesamte Produktfüllung des Silos zu kühlen.

3. Verfahren nach Anspruch 1 oder 2, **dadurch gekennzeichnet, dass** nach einer anfänglichen Grundbefüllung des Entgasungssilos (4) mit dem rezyklierten Kunststoffgranulat (62) eine Einleitung des erhitzten Spülgases während der weiteren Befüllung stattfindet.

4. Verfahren nach einem der Ansprüche 1 bis 3, **dadurch gekennzeichnet, dass** die Schüttgutdichten der rezyklierten Kunststoffgranulate (62) im Bereich zwischen 500 kg/m³ - 600 kg/m3 liegen.

5. Verfahren nach einem der Ansprüche 1 bis 4, **dadurch gekennzeichnet, dass** die Eintrittstemperatur der rezyklierten Kunststoffgranulate (62) in das Entgasungssilos (4) im Bereich zwischen+45°C und +60°C liegt.

6. Verfahren nach einem der Ansprüche 1 bis 5, **dadurch gekennzeichnet, dass** das Entgasungssilo (4) bei der anfänglichen Füllung in einem Zeitraum (46-47) mit einem niedrigerem Füllstand (38) befüllt wird und dass sich beim Durchströmen des rezyklierten Kunststoffgranulats (62) mit dem heißen Gas bei geringer Gasgeschwindigkeit eine untere Warmzone (63) ergibt, die nach oben zum Deckenbereich hin in eine kühle Zone (64) übergeht.

7. Verfahren nach einem der Ansprüche 1 bis 6, **dadurch gekennzeichnet, dass** zwischen der unteren Warmzone (63) und der kühlen Zone (64) ein Wärmeübergangsbereich (55) gebildet ist, der während des Befüllens des Entgasungssilos (4) in Richtung auf den Deckenbereich des Entgasungssilos (4) wandert.

8. Verfahren nach einem der Ansprüche 1 bis 7, **dadurch gekennzeichnet, dass** der zwischen der kühlen (64) und der warmen Zone (63) gebildete Wärmeübergangsbereich (55) im rezyklierten Kunststoffgranulat (62) gleichbleibt und lediglich in vertikaler Richtung im Entgasungssilo (4) verschoben wird und dadurch eine Vermischung des rezyklierten
Kunststoffgranulats (62) bei den niedrigen Durchströmgeschwindigkeiten vermieden wird.

9. Verfahren nach einem der Ansprüche 1 bis 8, **dadurch gekennzeichnet, dass** das Entgasungssilo (4) in einem Bereich von bis zu 10 Stunden zunächst bis zu einem minimalen Füllstand (38) befüllt wird, und dass in einem Zeitbereich (46-47) von 10 Stunden bis 18 Stunden ein Aufheizen des Siloinhaltes erfolgt, und dass in diesem Zeitbereich (46-47) eine weitere Befüllung stattfinden kann.

10. Verfahren nach einem der Ansprüche 1 bis 9, **dadurch gekennzeichnet, dass** in einem weiteren Zeitbereich (47-48) von 18 Stunden bis 34 Stunden ein Aufheiz- und Entgasungsbetrieb erfolgt, bei dem der Wärmeübergangsbereich (55) von einem unteren Bereich in den Deckenbereich des Entgasungssilos (4) wandert und dabei die zu behandelnden rezyklierte Kunststoffgranulate (62) gleichmäßig und ohne Vermischung durchströmt werden, wodurch es zu einer optimalen Entgasung kommt.

11. Verfahren nach einem der Ansprüche 1 bis 10, **dadurch gekennzeichnet, dass** erst ab einer Lagerzeit (48) von vorzugsweise 34 Stunden der Aufheizungs- und Entgasungsbetrieb eingestellt und dann nur noch bis zu einem Zeitraum (49) von 70 Stunden gespült wird.

12. Verfahren nach einem der Ansprüche 1 bis 11, **dadurch gekennzeichnet, dass** sich eine Energieeinsparung dadurch ergibt, dass gegen Ende der Aufheizzeit (48) mit einem kühlen Spülgas gekühlt wird, und dass das gleiche Spülgas, was vorher aufgeheizt wurde nunmehr im nicht aufgeheiztem Zustand zur Kühlung des Granulats bei gleichmäßiger Durchströmung des Granulats verwendet wird.

13. Verfahren nach Anspruch 12, **dadurch gekennzeichnet, dass** durch die Spülung mit einem kühlen Spülgas am Ende der Aufheizzeit (48) von 34 Stunden nunmehr eine untere Kühlzone (65) von unten nach oben durch das rezyklierte Kunststoffgranulat (62) wandert und die Spülung mit Spülgas so lange aufrechterhalten wird, bis die Kühlzone (65) etwa 1/3 der Schüttungshöhe und/oder der Silohöhe bis zum Deckenbereich erreicht hat.

14. Verfahren nach einem der Ansprüche 1 bis 13, **dadurch gekennzeichnet, dass** bei erfolgender Spülung mit einem kühlen Spülgas, wenn die untere Kühlzone (65) etwa 1/3 der Schüttungshöhe und/oder der Deckenhöhe erreicht hat, das kühlere Granulat (62) nun bereits aus dem unteren kühlen Konusbereich (21) ausgelassen wird und das noch heiße, obere rezyklierte Kunststoffgranulat(62), welches noch nicht gekühlt wurde, langsam mit seinem unteren Kühlübergangsbereich (56) nach unten sinkt und in die untere Kühlzone (65) gelangt und dort weiter abgekühlt wird, ohne dass es erforderlich ist, die gesamte Produktfüllung des Silos zu kühlen.

15. Vorrichtung zur Desodorierung von rezyklierten Kunststoffgranulaten (62) zur Entfernung flüchtiger organischer Verbindungen (VOC) durch Wärme- und/oder Gasbehandlung in einem von Spülgas durchströmten Entgasungssilo (4), in dessen Bodenbereich das das Spülgas einleitbar ist
**dadurch gekennzeichnet, dass**
das Entgasungssilo (4) einen unteren Konusbereich (21) aufweist, in den das Spülgas einleitbar ist,
dass die Behandlung der rezyklierte Kunststoffgranulate (62) im Entgasungssilo (4) chargenweise erfolgt, dass
in den oberen Bereich des Konusbereichs (21) des Entgasungssilos (4) eine das Spülgas führende Spülgasleitung (28) mündet und dass von dieser Spülgasleitung (28) eine Nebengasleitung (29) abzweigt, die in den Konusspitzenbereich mündet
und dass im Heizbetrieb das von einem Ventilator (14) angesaugte kühle Spülgas in einem Rekuperator (17) vorwärmbar ist und dass der Rekuperator (17) mit der aus dem Deckenbereich des Entgasungssilos (4) abgeführten Abgasleitung (22) heizbar ist.

16. Vorrichtung nach Anspruch 15 zur Ausführung des Verfahrens nach einem oder mehreren der Ansprüche 1 bis 14, **dadurch gekennzeichnet, dass** das Entgasungssilo (4) mit ca. min. 95% Füllung gefüllt ist, dass eine Granulat-Masse von 45 t Granulat vorhanden ist, und dass das Entgasungssilo (4) mit einem Massenstrom von 1,5 t/h Granulat befüllbar ist, und dass das heiße Spülgas in 1 Stunde eine Granulatschicht von 1,5 t von einer Temperatur von 60°C auf 120°C aufheizt.

17. Vorrichtung nach einem der Ansprüche 15 bis 16, **dadurch gekennzeichnet, dass** die Verweilzeit für die geforderte Entgasung bei der Desodorierungstemperatur von 120°C für alle Granulatkörner im Normbetrieb 12 h ist.

18. Vorrichtung nach einem der Ansprüche 15 bis 17, **dadurch gekennzeichnet, dass** zur Vermeidung von Kunststoffgranulat-Agglomeraten eine temporäre Umföderung mit einer Umförderleitung (24) vorhanden ist, welche einen Produktumlauf vom Auslaß des Entgasungssilos (4) in den Deckenbereich vorsieht.

19. Vorrichtung nach Anspruch 15, **dadurch gekennzeichnet, dass** die vom Rekuperator (17) vorgewärmte Luft in anschließenden in einem oder mehreren Lufterhitzern erhitzbar ist.

20. Vorrichtung nach einem der Ansprüche 15 bis 19, **dadurch gekennzeichnet, dass** für den Kühlbetrieb von der die kühle Luft führenden Gasleitung (58) eine Bypassleitung (23) abzweigt, welche ventilgesteuert in die Spülgasleitung (28) einmündet.
